# EUROPEAN PATENT APPLICATION

(11) **EP 4 550 677 A1**
(43) Date of publication of application: **07.05.2025**
(21) Application number: 24756166.5
(22) Date of filing: 06.02.2024
(51) Int. Cl.: H04B 1/401, H04B 1/04, H04B 1/18, H04W 88/06

(54) **MULTIMODE MULTIBAND RADIO FREQUENCY FRONT-END CIRCUIT, RADIO FREQUENCY FRONT-END APPARATUS, AND MOBILE PHONE**

(30) Priority: 16.02.2023 CN 202310124522
(71) Applicant: Vanchip (Tianjin) Technology Co., Ltd., Tianjin 300457 (CN)
(72) Inventor: LU, Xianwei, Tianjin 300457 (CN); WANG, Feng, Tianjin 300457 (CN)
(74) Representative: Grünecker Patent- und Rechtsanwälte PartG mbB
(86) International application number: PCT/CN2024/076398
(87) International publication number: WO 2024/169793

(57) **Abstract**

The present invention discloses a multi-mode, multi-band radio-frequency front-end (RFFE) circuit, a RFFE device and a mobile phone using the circuit device, wherein the circuit is provided between a transceiver and an antenna, and the circuit comprises: a transmission module, which is connected to the transceiver and configured to amplify a radio-frequency (RF) transmission signal generated by the transceiver; a receiving module having a transmission channel and a receiving channel; the receiving channel receives a radio-frequency (RF) signal from the antenna, amplifies the RF signal and transmits it to the transceiver; the transmission channel is cascaded to an output terminal of the transmission module and transmits the RF transmission signal amplified by the transmission module to the antenna; 2G low-pass filter matching circuits, connected between the transmission module and the receiving module; power amplifiers in the transmission module supporting 2G to 5G communication standards.

## Description

### FIELD OF TECHNOLOGY

The present invention relates to the field of communication technology, and more specifically, to a multi-mode, multi-band radio-frequency front-end (RFFE) circuit, a RFFE device and a mobile phone using the circuit device.

### BACKGROUND

In the context of the 5G communication era, mobile terminals need to be backward compatible with older communication standards such as 4G, 3G, 2G, etc., to better meet the needs of mobile signal coverage and roaming.

Accordingly, mobile terminals need to have physical channels for all frequency bands of these communication standards simultaneously - up to 20 or more frequency bands, and some frequency bands also require MIMO (Multiple Input Multiple Output) functionality. This can only be achieved by stacking hardware, leading to continually rising cost and higher and higher price of the mobile phone. In recent years, the increasing demand for hardware has led to a series of problems such as high chip prices and supply shortages. Therefore, various manufacturers are attempting to simplify designs by optimizing radio-frequency (RF) architecture solutions, minimizing hardware cost, and avoiding hardware resource waste.

At the same time, it is necessary to consider that the 2G (GSM) standard will enter a transition period of network withdrawal, and hardware reduction flexibility should be reserved for 2G network withdrawal.

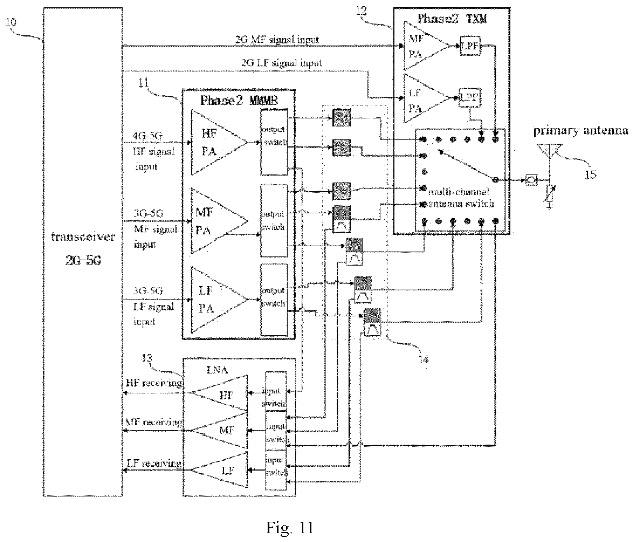

The existing 2G~4G RFFE foundation is the traditional Phase2/5N architecture (as shown in Fig. 11), which was proposed by leading RF device manufacturers in 2013 and has been around for nearly 10 years. The RFFE mainly comprises a transceiver 10, a multi-mode, multi-band power amplifier 11 (MMMB), a power amplifier switch module 12 (TXM), a series of optional external filters 14, an antenna 15, and a possibly required low noise amplifier (LNA) 13.

The Phase2/5N power amplifier specifically refers to two modules: the multi-mode, multi-band power amplifier 11 and the power amplifier switch module 12, and the common application sizes are TXM (5.5mm * 5.3mm) and MMMB (4.0mm * 6.8mm).

The transmission link for a certain 2G frequency band is: an input signal is provided by the transceiver 10, amplified by the 2G power amplifier switch module 12, and reaches the antenna 15. The receiving link is: a signal from the antenna 15 passes through the built-in switch of the power amplifier switch module 12 and the external filter 14, is amplified by the LNA 13, and finally reaches the transceiver 10.

The transmission link for a certain 3G/4G/5G frequency band is: an input signal is provided by the transceiver 10, amplified by the multi-mode multi-band power amplifier 11, passes through the external filter 14, and then through the power amplifier switch module 12 to reach the antenna 15. The receiving link is: an signal from the antenna 15 passes through the built-in switch of the power amplifier switch module 12 and the external filter 14, is amplified by the LNA 13, and finally reach the transceiver 10.

There are two low-frequency power amplifiers and two medium-frequency power amplifiers in the entire architecture, belonging to the multi-mode multi-band power amplifier 11 and the power amplifier switch module 12, respectively. The issue of comprehensive reuse is not considered which results in certain waste.

This architecture is most suitable in the 4G+3G+2G era and is the best solution that balances cost, flexibility, and integration. But with the addition of 5G and new demands such as 2G network withdrawal, this architecture needs to be reorganized and optimized.

The existing 5G high-end RFFE is based on Phase7L (L-PAMiD), which has gradually evolved from Phase2. It reorganizes various elements of the traditional Phase2 architecture. In addition to common integrations such as power amplifiers and switches, the most critical aspect is the integration of SAW/BAW process filter products such as duplexers into the module. In the later stage, the LNA is also integrated, making the RF module integration reach an unprecedented height. Its advantage lies in the maximum integration of originally peripheral passive devices, which significantly reduces the number of RF devices and makes applications more convenient. It also helps users save valuable PCB layout area. Meanwhile, its drawbacks are high cost and insufficient flexibility.

Currently, both Phase2/5N and Phase7L are facing their own problems, and have greater limitations when facing 2G network withdrawal. Therefore, a compromise solution is needed that not only solves the problem of 2G network withdrawal, but also takes into account factors such as cost, integration, and flexibility that must be considered.

### SUMMARY

The purpose of the present invention is to propose a multi-mode, multi-band RFFE circuit, a RFFE device and a mobile phone using the circuit device, which can significantly improve the utilization of power amplifier components and reduce the overall system cost.

To achieve the above purpose, the present invention provides a multi-mode, multi-band RFFE circuit, the circuit being provided between a transceiver and an antenna, and the circuit comprising:
a transmission module, which is connected to the transceiver and configured to amplify a RF transmission signal generated by the transceiver;
a receiving module having a transmission channel and a receiving channel; the receiving channel receives a RF signal from the antenna, amplifies the RF signal and transmits it to the transceiver; the transmission channel is cascaded to an output terminal of the transmission module and transmits the RF transmission signal amplified by the transmission module to the antenna;
2G low-pass filter matching circuits, connected between the transmission module and the receiving module;
power amplifiers in the transmission module supporting 2G to 5G communication standards.

**In** an optional solution, an input terminal of a low-frequency power amplifier in the transmission module is connected to a single-pole double-throw input switch to receive a 2G low-frequency input signal and a 3G-5G low-frequency input signal from the transceiver respectively; an output terminal of the low-frequency power amplifier is connected to a first single-pole multi-throw output switch.

**In** an optional solution, an input terminal of a medium-frequency power amplifier in the transmission module is connected to a single-pole double-throw input switch to receive a 2G medium-frequency input signal and a 3G-5G medium-frequency input signal from the transceiver respectively; an output terminal of the medium-frequency power amplifier is connected to a second single-pole multi-throw output switch.

**In** an optional solution, an input terminal of a high-frequency power amplifier in the transmission module is directly connected to a 4G-5G high-frequency signal output terminal of the transceiver, and an output terminal of the high-frequency power amplifier is connected to a multi-pole multi-throw output switch.

**In** an optional solution, the receiving module comprises a multi-channel antenna switch, a multiplexer and a filter, LNAs and input switches connected thereto;
the multi-channel antenna switch has at least one common output terminal, the common output terminal is configured to be connected to a terminal of the antenna, and different input terminals of the multi-channel antenna switch are connected to a common terminal of the multiplexer, the filter, or the 2G low-pass filter matching circuit;
the other end of the filter is connected to an output terminal of the second single-pole multi-throw output switch or an output terminal of the multi-pole multi-throw output switch;
a transmission terminal of the multiplexer is connected to an output terminal of the first single-pole multi-throw output switch, an output terminal of the second single-pole multi-throw output switch, or the multi-pole multi-throw output switch; a receiving terminal of the multiplexer is connected to the input switch connected to the LNA;
an output terminal of the LNA is connected to the transceiver.

In an optional solution, one terminal of the multi-pole multi-throw output switch can receive a signal output from the filter and transmit the signal from another terminal of the multi-pole multi-throw output switch to the input switch of the receiving module.

In an optional solution, the LNAs comprises a low-frequency LNA, a medium-frequency LNA, and a high-frequency LNA.

In an optional solution, the 2G low-pass filter matching circuit is configured to support 2G low frequency band;
one end of the 2G low-pass filter matching circuit is connected to an output terminal of the first single-pole multi-throw output switch, and the other end is connected to an input terminal of the multi-channel antenna switch.

In an optional solution, the 2G low-pass filter matching circuit is configured to support a 2G medium frequency band;
one end of the 2G low-pass filter matching circuit is connected to an output terminal of the second single-pole multi-throw output switch, and the other end is connected to an input terminal of the multi-channel antenna switch.

In an optional solution, the multi-channel antenna switch is a double-pole multi-throw switch, double poles of the common output terminal are respectively connected to terminals of corresponding two antennas, and the two antennas are a low-frequency antenna and a medium-high frequency antenna, respectively.

In an optional solution, the multiplexer is a non-temperature-compensation multiplexer, and the filter is a non-temperature-compensation filter.

In an optional solution, the multi-channel antenna switch, the multiplexer, the filter, the LNAs and the input switches of the receiving module are integrated on a chip module.

The present invention also provides a RFFE device, comprising a transceiver and an antenna, and also comprising the above described multi-mode, multi-band RFFE circuit, the circuit being provided between the transceiver and the antenna.

The present invention also provides a mobile phone, comprising the above described RFFE device.

The beneficial effects of the present invention are:
Low cost: the reuse of the low-frequency and medium-frequency power amplifiers in the transmission module is to remove the original independent GSM power amplifiers from the receiving module, which can greatly improve the utilization of power amplifier components and reduce the overall system cost. In the receiving module, by removing the heat sources (power amplifiers), the module does not require a high cost temperature-compensation filter (TCSAW), which further benefits the overall cost reduction.

High integration: the removal of the power amplifier circuit in the new receiving module has allowed for more space, making it easier to integrate more peripheral devices. This reduces the space of the entire peripheral hardware circuit and saves valuable PCB area. At the same time, the difficulty of designing peripheral circuits for users is reduced, making it easier to use and helping to save design time.

Compatibility: the package of this architecture is the same as Phase2, which is the origin of compatibility advantages. Due to its high penetration rate and coverage advantages, the withdrawal of GSM is a long-term transitional process. The advantages of this architecture are particularly significant during the transition period of GSM network withdrawal, as it has dual compatibility preparation. Terminal manufacturers can obtain the best solution no matter when and where GSM is withdrawn from the network, avoiding the dual waste of GSM amplifier hardware and area.

The present invention has other features and advantages, which will be apparent from the accompanying drawings and specific embodiments incorporated herein, or will be described in detail in the accompanying drawings and specific embodiments incorporated herein, which together serve to explain the specific principles of the present invention.

### BRIEF DESCRIPTION OF THE DRAWINGS

By providing a more detailed description of exemplary embodiments of the present invention in conjunction with the accompanying drawings, the aforementioned and other objects, features, and advantages of the present invention will become more apparent.
Fig. 1 shows a schematic circuit structure diagram of the multi-mode multi-band RFFE circuit according to an embodiment of the present invention.
FIG. 2 shows a schematic structural diagram of a single-pole multi-throw (SP3T) switch and a multi-pole multi-throw (double-pole double-throw) switch according to an embodiment of the present invention.
Fig. 3 shows a schematic diagram of a medium-frequency FDD transmission scenario according to an embodiment of the present invention.
Fig. 4 shows a schematic diagram of medium-frequency FDD receiving and 2G medium-frequency receiving reuse scenario according to an embodiment of the present invention.
Fig. 5 shows a schematic diagram of high-frequency TDD transmission and filter reuse scenario according to an embodiment of the present invention.
Fig. 6 shows a schematic diagram of high-frequency TDD receiving and filter reuse scenario according to an embodiment of the present invention.
Fig. 7 shows a schematic diagram of a 2G low-frequency transmission scenario according to an embodiment of the present invention.
Fig. 8 shows a schematic diagram of a 3G-5G low-frequency FDD transmission scenario according to an embodiment of the present invention.
Fig. 9 shows a schematic diagram of 3G-5G low-frequency FDD receiving and 2G low-frequency receiving reuse scenario according to an embodiment of the present invention.
Fig. 10 shows a schematic circuit structure diagram of the multi-mode multi-band RFFE circuit according to another embodiment of the present invention.
Fig. 11 shows a schematic diagram of the traditional Phase2/5N architecture in the prior art.

### Reference numbers:

10 transceiver; 11 multi-mode, multi-band power amplifier; 12 power amplifier switch module; 14 external filter; 15 receiving and transmitting antenna; 13 LNA; 100 transceiver; 110 transmission module; 111 low-frequency (LF) power amplifier (PA); 112 medium-frequency (MF) power amplifier; 113 high-frequency (HF) power amplifier; 120 receiving module; 121 multi-channel antenna switch; 122 multiplexer; 123 LNA; 150 antenna; 151 low-frequency antenna; 152 medium-high frequency antenna.

### DESCRIPTION OF THE EMBODIMENTS

The invention will be described in more detail below. Although preferred embodiments are provided, it should be understood that the invention may be embodied in various forms and should not be limited to the embodiments set forth herein. Rather, these embodiments are provided so that this invention will be thorough and complete, and will fully convey the scope of the invention to those skilled in the art.

The present invention replans and synthesizes the traditional Phase2/5N and Phase7L RF architectures, organically combines the original functional modules, and integrates more functions such as filters and LNAs, thus proposing a new dual chip RF architecture with low-cost, high integration, and strong compatibility.

In the replanning, the LB (low band) and MB (medium band) power amplifiers of MMMB (multi-mode multi-band) PA (power amplifier) are reused as 2G amplification channels, eliminating the hardware of the other two LB and MB power amplifiers in the original TXM and achieving maximum hardware cost savings in terms of power amplifiers. The greatest advantage is that when 2G is withdrawn from the network, it only needs to be replaced with the original Phase2 MMMB, making it easy to achieve board level compatibility.

In the replanned TXM, the integrated filter is far away from the heating element (PA), so there is no need to use expensive temperature-compensation filters (TCSAW), which also reduces the hardware cost of passive components, so that the reduction in hardware cost will be significant. Meanwhile, for different frequency bands in different regions, different filters can be replaced to achieve board level compatibility for users.

Especially, the present invention continues the original package of Phase2/5NTXM (5.5mm * 5.3mm) and MMMB (4.0mm * 6.8mm), which has the advantages of small size, low cost, and good flexibility, and is also convenient for users to verify imports. Its comprehensive advantages are obvious, as shown in comparison table 1.

**Table 1**

| Type of RFFE architecture | Overall cost | Usage complexity | Usage flexibility | Chip size | Filter | LNA | 2G network withdrawal compatibility |
|---|---|---|---|---|---|---|---|
| Phase2/5N | low | high | high | small | external | external | need replanning |
| Phase7L | high | low | low | large | built-in | built-in | possible limited simplification |
| Phase2/5N Plus (present invention) | low | low | high | small | built-in | built-in | board level compatibility |

The present invention supports multiple cellular frequency bands, some of which are common as shown in table 2. It should be noted that one or more features of the present invention can be implemented in frequency bands other than those listed in the table below. The RF signals mentioned in the invention should include at least the frequency bands listed in the table.

**Table 2**

| Frequency band | Mode | Transmission frequency (MHz) | Receiving frequency (MHz) | Type of frequency band |
|---|---|---|---|---|
| B1 | FDD | 1920-1980 | 2110-2170 | medium band |
| B3 | FDD | 1710-1785 | 1805-1880 | medium band |
| B34 | TDD | 2010-2025 | 2010-2025 | medium band |
| B39 | TDD | 1880-1920 | 1880-1920 | medium band |
| B5 | FDD | 824-849 | 869-894 | low band |
| B8 | FDD | 880-915 | 925-960 | low band |
| B38 | TDD | 2570-2620 | 2570-2620 | high band |
| B40 | TDD | 2300-2400 | 2300-2400 | high band |
| B41 | TDD | 2496-2690 | 2496-2690 | high band |

In addition, since PhaseSN and Phase2 are essentially the same architecture scheme, only PhaseSN has added 5G functionality on the same frequency, the present invention is also applicable to implementing similar PhaseSN Plus architectures. The following will use Phase2 Plus to illustrate the details of the invention.

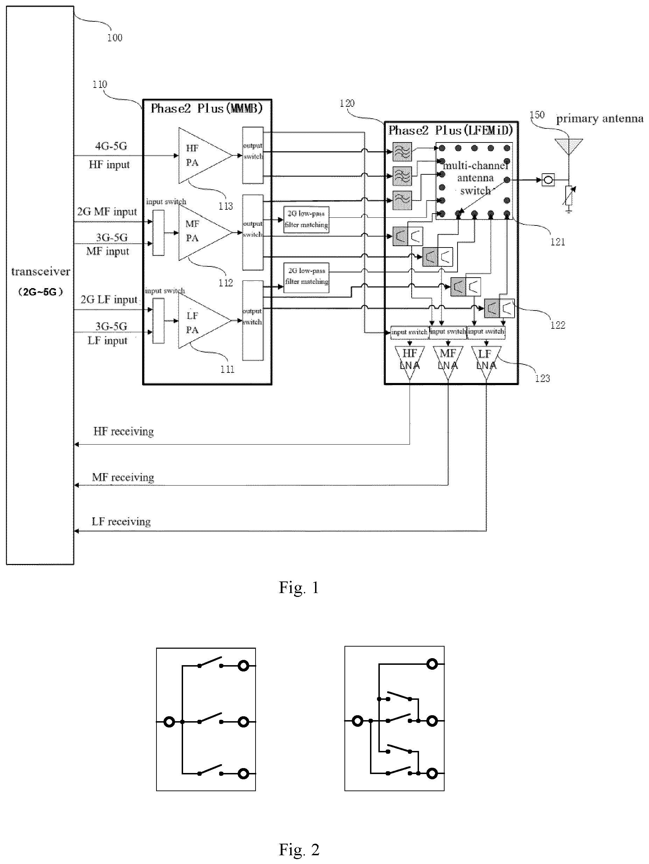

Referring to Fig. 1, the present embodiment provides a multi-mode, multi-band RFFE circuit, the circuit being provided between a transceiver 100 and an antenna 150, and the circuit comprising:
a transmission module 110, which is connected to the transceiver 100 and configured to amplify a RF transmission signal generated by the transceiver 100;
a receiving module 120 having a transmission channel and a receiving channel; the receiving channel receives a RF signal from the antenna, amplifies the RF signal and transmits it to the transceiver 100; the transmission channel is cascaded to an output terminal of the transmission module 110 and transmits the RF transmission signal amplified by the transmission module 110 to the antenna 150;
2G low-pass filter matching circuits, connected between the transmission module 110 and the receiving module 120;
power amplifiers in the transmission module 110 supporting 2G to 5G communication standards.

Specifically, the transmission module 110 has a low-frequency power amplifier 111, a medium-frequency power amplifier 112, and a high-frequency power amplifier 113, which are configured to amplify the RF transmission signals of corresponding 2G-5G frequency bands, respectively; 2G low-frequency and medium-frequency signals transmitted to the input terminal of the 2G low-pass filter matching circuit are amplified by the low-frequency power amplifier 111 and the medium-frequency power amplifier 112.

An input terminal of the low-frequency power amplifier 111 in the transmission module 110 is connected to a single-pole double-throw input switch to receive a 2G low-frequency input signal and a 3G-5G low-frequency input signal from the transceiver respectively; an output terminal of the low-frequency power amplifier 111 is connected to a first single-pole multi-throw output switch. The low-frequency power amplifier 111 has two operation states corresponding to two connection methods: when in the first operation state, the single-pole double-throw input switch is connected to the 2G low-frequency input signal, and the bias and configuration of the low-frequency power amplifier 111 enable it to amplify the 2G low-frequency signal; when in the second operation state, the single-pole double-throw input switch is connected to the 3G-5G low-frequency input signal, and the bias and configuration of the low-frequency power amplifier 111 enable it to amplify the 3G-5G low-frequency signal.

An input terminal of the medium-frequency power amplifier 112 in the transmission module is connected to a single-pole double-throw input switch to receive a 2G medium-frequency input signal and a 3G-5G medium-frequency input signal from the transceiver 100 respectively; an output terminal of the medium-frequency power amplifier 112 is connected to a second single-pole multi-throw output switch. The medium-frequency power amplifier 112 has two operation states corresponding to two connection methods: when in the first operation state, the single-pole double-throw input switch is connected to the 2G medium-frequency input signal, and the bias and configuration of the medium-frequency power amplifier 112 enable it to amplify the 2G medium-frequency signal; when in the second operation state, the single-pole double-throw input switch is connected to the 3G-5G medium-frequency input signal, and the bias and configuration of the medium-frequency power amplifier 112 enable it to amplify the 3G-5G medium-frequency signal.

An input terminal of the high-frequency power amplifier 113 in the transmission module 110 is directly connected to a 4G-5G high-frequency signal output terminal of the transceiver 100, and an output terminal of the high-frequency power amplifier 113 is connected to a multi-pole multi-throw output switch.

The receiving module 120 consists of at least one set of multi-channel antenna switches 121, one set of multiplexers 122 and filters, one set of LNAs 123 and one set of input switches connected thereto. Each set of multi-channel antenna switches 121 has a common input terminal connected to a terminal of the antenna 150. Output terminals of the multi-channel antenna switch 121 are connected to any one of the three scenarios:
1. connected to a common terminal of the multiplexer 122, supporting FDD signal;
2. connected to the filter, supporting medium-high frequency FDD signal;
3. connected to the output terminal of the receiving module 110 (the 2G low-pass filter matching circuit) to connect 2G low-frequency and medium-frequency transmission channels.

The receiving module 120 comprises at least one multiplexer 122. The common terminal of each multiplexer 122 is connected to the multi-channel antenna switch 121, and the transmission terminal of the multiplexer 122 (corresponding to the transmission frequency in the FDD signal) is connected to a single-pole multi-throw RF switch (the first single-pole multi-throw output switch or the second single-pole multi-throw output switch), and the receiving terminal of the multiplexer 122 is further connected to the LNA 123. The output terminal of the LNA 123 is connected to the output terminal of the module, and the received signal is further cascaded to the receiving circuit of the transceiver 100 through the output terminal. The transmission terminal of each multiplexer 122 (corresponding to the transmission frequency in the FDD signal) is connected to the input terminal of the module. The RF signal amplified by the transmission module 110 is cascaded through this input terminal to the receiving module 120, and finally transmitted to the terminal of the antenna 150.

The receiving module 120 comprises at least one filter. One end of each filter is connected to the input terminal of the module to receive the amplified RF signal output by the transmission module 110. The other end of the filter is connected to the multi-channel antenna switch 121. The filter suppresses spurious signals in 4G-5G TDD out-of-band signals.

The 2G low-pass filter matching circuit is configured to support the 2G low frequency band and is used to suppress harmonics and out-of-band noise in the 2G low-frequency range; one end of the 2G low-pass filter matching circuit is connected to the output terminal of the first single-pole multi-throw output switch, and the other end is cascaded to the input terminal of the receiving module 120, and further connected to one input terminal of the multi-channel antenna switch, transmitting the 2G low-frequency signal through the antenna 150.

The 2G low-pass filter matching circuit can also be configured to support the 2G medium frequency band, which is used to suppress the harmonics and out-of-band spurious in the 2G medium-frequency range; one end of the 2G low-pass filter matching circuit is connected to the output terminal of the second single-pole multi-throw output switch, and the other end is cascaded to the input terminal of the receiving module 120, and further connected to one input terminal of the multi-channel antenna switch, transmitting the 2G medium-frequency signal through the antenna 150.

**In** one embodiment, the multi-channel antenna switch is a dual-pole multi-throw switch, with the dual poles connected to terminals of the corresponding two antennas. The two antennas are a low-frequency antenna and a medium-high frequency antenna, supporting low-frequency transmission and receiving functions as well as medium-high frequency transmission and receiving functions. The dual antenna structure supports carrier aggregation between low-frequency and medium-high frequency.

The multi-pole multi-throw switch connected to the output terminal of the high-frequency power amplifier 113 in the transmission module 110 has at least one operation state: one terminal of the multi-pole multi-throw output switch can receive TDD RF receiving signal (for example, the signal output by the filter) from the receiving module 120, and transmit the signal from another terminal to the receiving module 120 (for example, transmitting to the LNA).

In the receiving module 120, due to the removal of the heat source (power amplifier), the receiving module does not require a high cost temperature-compensation filter (TCSAW). Therefore, in one embodiment, the multiplexer may be a non-temperature-compensation multiplexer, and the filter may be a non-temperature-compensation filter.

The multi-channel antenna switch 121, the multiplexer 122, the filter, the LNAs 123 and the input switches of the receiving module 120 are integrated on a chip module. In areas where 2G is withdrawn from the network, the transmission module 110 can be replaced with a multi-mode multi-band module that only supports 3G-5G communication standards and has the same size specifications and pin definitions, and the 2G filter matching circuit can be removed without affecting the transmission and receiving functions.

### Embodiment 1

This embodiment adopts a core module of dual chip architecture, comprising the transmission module 110 (simply referred to as MMMB), and the receiving module 120 (simply referred to as L-FEMiD) composed of switches, filters, LNAs, etc. The package sizes are 5.5mm * 5.3mm and 4.0mm * 6.8mm, which are consistent with Phase2. The low (medium) frequency band power amplifier in the transmission module 110 is connected to the input mode selection switch, which is respectively connected to 2G low (medium) frequency and 3G-5G low (medium) frequency input signals. At the same time, the output terminal of the low (medium) frequency power amplifier is connected to a frequency band selection switch, which is a single-pole multi-throw switch. The input terminal of the high-frequency power amplifier in the transmission module 110 is directly connected to the high-frequency output of the transceiver, while the output terminal is connected to the multi-pole multi-throw switch.

The multi-pole multi-throw switch allows the filter in the receiving module to be used in both the transmission and receiving channels in TDD mode. In the transmission state, the transmitted signal is amplified by the power amplifier and transmitted to the receiving module through one channel of the multi-pole multi-throw switch. The harmonic and spurious components in the amplified signal are filtered out by the filter. In the receiving state, the received signal is transmitted from the receiving module to one input terminal of the multi-pole multi-throw switch, and then output from another output terminal. It is further transmitted to the receiving module, amplified by the LNA, and finally transmitted to the receiving terminal of the transceiver.

The input and output switches in the schematic diagram of Fig.1 are all single-pole multi-throw switches, except for the switch connected to the output terminal of the high-frequency power amplifier in the transmission module 110, as shown in the left figure of Fig.2. The switch connected to the output terminal of the high-frequency power amplifier is multi-pole multi-throw switch, as shown in the right figure of Fig. 2. Those skilled in the art shall understand that the actually used number of switch throws is related to specific applications, but does not go beyond the spirit of the present invention.

Compared with the Phase2 architecture, the present embodiment has a higher degree of integration and hardly requires external important devices (SAW and LNA) and can be designed compatible with Phase2 at the board level. Compared with the Phase7L architecture, the present embodiment is smaller in size, more streamlined, and lower in cost, while maintaining the advantage of integration. The architecture of the present invention is applicable to all application scenarios of 5G and downward compatible with 4G, 3G and 2G.

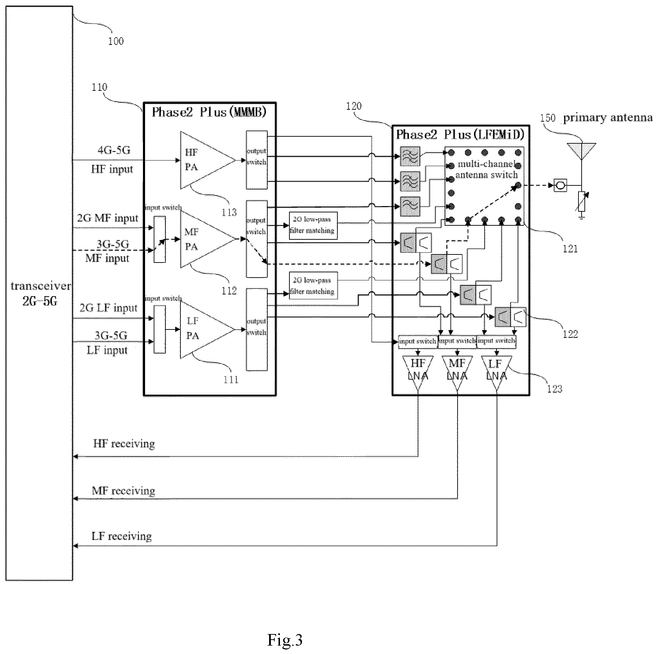

### Application scenario 1: 3G-5G medium-frequency FDD transmission scenario (Fig. 3)

The medium-frequency (such as frequency band B3) FDD transmission signal starts from the output terminal of the transceiver, is connected to the single-pole double-throw switch in the transmission module 110 (MMMB) in the direction of the dashed line of the 3G-5G medium-frequency input in the figure, and is output through one channel of the output switch after being amplified by the medium-frequency power amplifier. The output RF signal is transmitted to the receiving module 120 (LFEMID) and connected to the duplexer transmission terminal matched with the signal frequency band. After being filtered by the duplexer, the RF signal is output by the common terminal, transmitted to the antenna through the multi-channel antenna switch and transmitted.

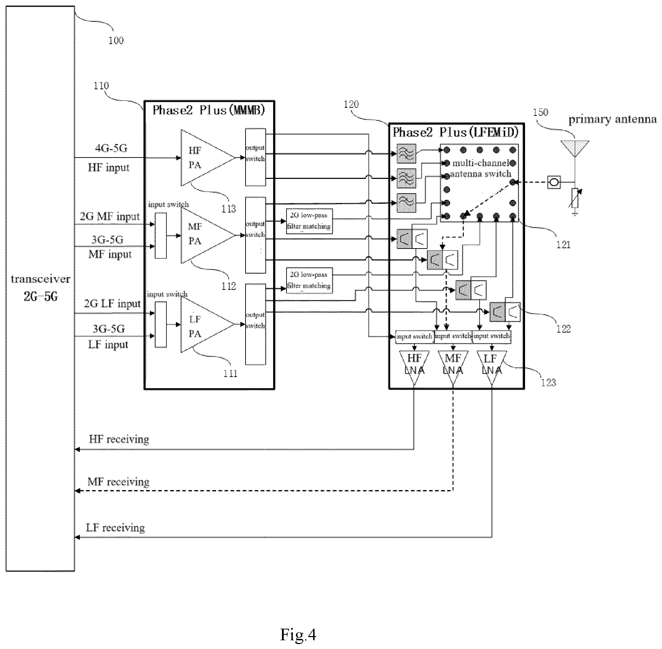

### Application scenario 2: medium-frequency FDD receiving scenario, which can be reused as 2G medium-frequency receiving scenario (Fig. 4)

After the FDD received signal in the same frequency band as that in scenario 1 is received by the antenna, it is transmitted to the same duplexer common terminal as that in scenario 1 through the same multi-channel antenna switch channel in the direction of the dashed line in the figure. After the received signal is filtered by the duplexer, it is transmitted from the receiving terminal of the duplexer to the single-pole multiple-throw switch in front of the medium-frequency LNA. Signals of different but similar frequency bands can share this LNA through the switch. The RF received signal amplified by the LNA is further transmitted from the receiving module 120 to the medium-frequency signal receiving terminal of the transceiver along the dashed line.

When the RFFE is in the medium frequency band 2G receiving state, since the 2G GSM is a time division multiple access/frequency division duplex system, its receiving frequency is the same as certain medium-frequency FDD frequency, and the transmission in 2G does not operate, the part of receiving filter in the duplexer can be reused by 2G receiving. The 2G medium-frequency received signal is transmitted from the antenna to the medium-frequency signal receiving terminal of the transceiver along the same dashed line.

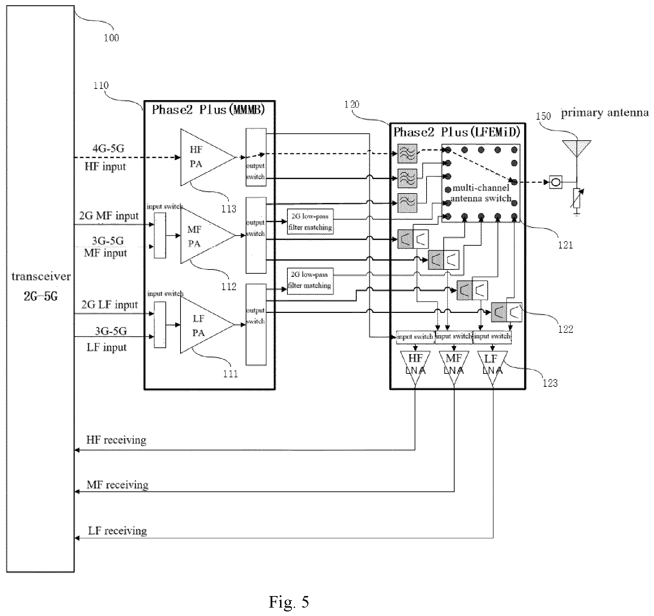

### Application scenario 3: 4G-5G high-frequency TDD transmission, filter reuse scenario (Fig. 5)

The high-frequency (such as frequency band B41) TDD transmission signal starts from the output terminal of the transceiver, is connected to the transmission module 110 in the direction of the dashed line of 4G-5G high-frequency input in the figure, is amplified by the high-frequency power amplifier, and then is output through one channel of the output switch. The output RF signal is transmitted to the receiving module 120 and connected to one end of the filter matched with the signal frequency band. After being filtered, the RF signal is output by the other end, transmitted to the antenna through the multi-channel antenna switch and transmitted.

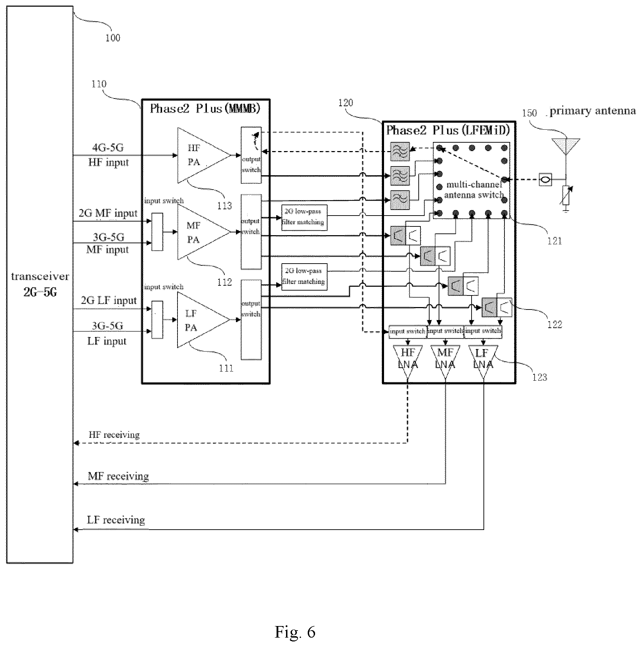

### Application scenario 4: high-frequency TDD receiving, filter reuse scenario (Fig. 6)

After the TDD received signal in the same frequency band as that in scenario 3 is received by the antenna, it enters the receiving module 120 in the direction of the dashed line in the figure, and is transmitted to the same filter as in scenario 3 through the same multi-channel antenna switch channel. The received signal, after being filtered, is transmitted to a multiple-pole multiple-throw switch of the transmission module 110, and is led out from another terminal of the switch to return to the receiving module 120, and is connected to the high-frequency LNA. Signals of different but similar frequency bands can share this LNA through the input switch. The RF received signal amplified by the LNA is further transmitted from the receiving module 120 to the high-frequency signal receiving terminal of the transceiver along the dashed line.

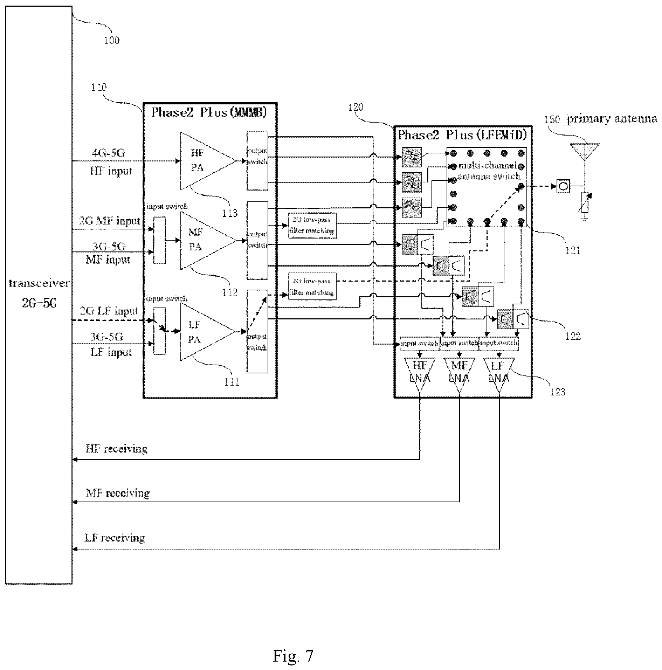

### Application scenario 5: 2G low-frequency transmission scenario (Fig. 7)

The 2G low-frequency transmission signal starts from the output terminal of the transceiver, is connected to the transmission module 110 in the direction of the dashed line of the 2G low-frequency input in the figure, is amplified by the low-frequency power amplifier, and is output through a certain channel of the output switch. The output RF signal is matched by the 2G low-pass filter located between the transmission module 110 and the receiving module 120, transmitted to the receiving module 120, and transmitted directly by the multi-channel antenna switch to the antenna and transmitted.

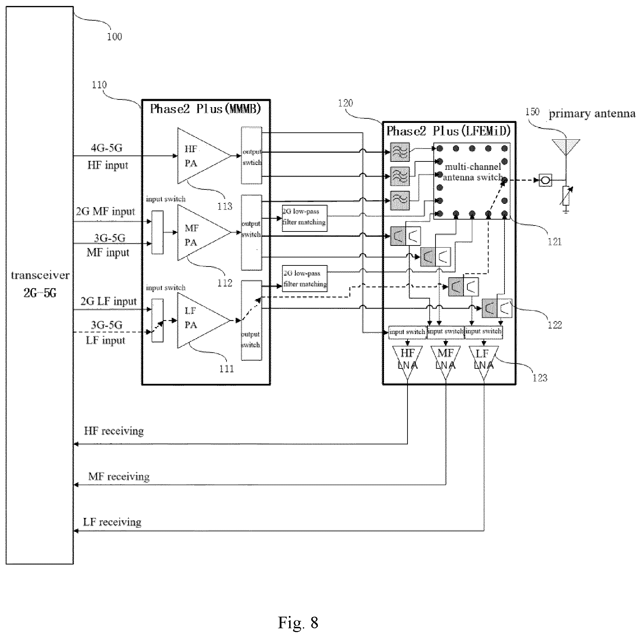

### Application scenario 6: 3G-5G low-frequency FDD transmission scenario (Fig. 8)

This scenario is similar to Application Scenario 1 and will not be repeated here.

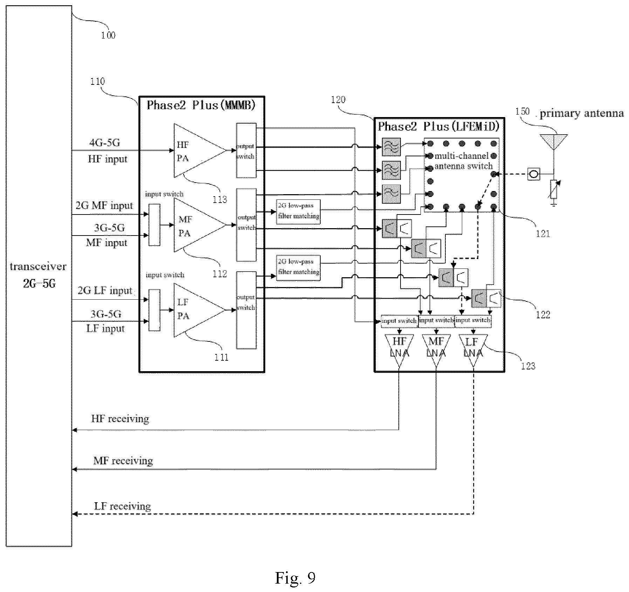

### Application scenario 7: low-frequency FDD receiving scenario, which can be reused as 2G low-frequency receiving scenario (Fig. 9)

This scenario is similar to Application Scenario 2 and will not be repeated here.

### Embodiment 2

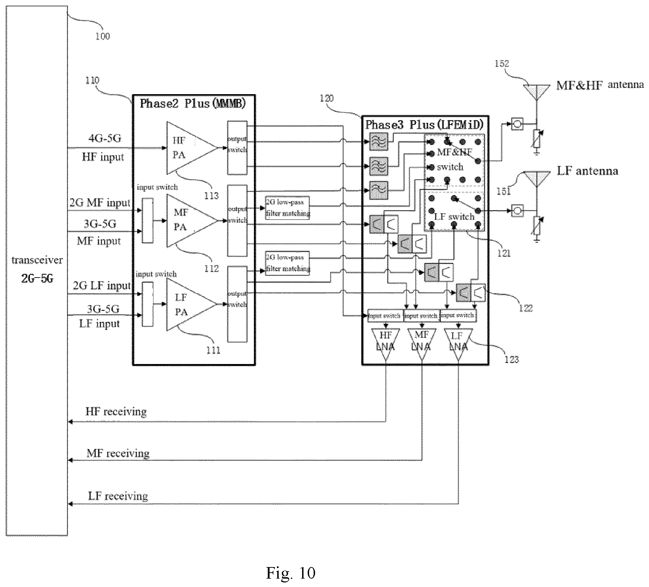

The case of Fig. 10 is a derivative of the schematic diagram of Fig. 1, which is called Phase3 Plus.

The difference between Phase3 and Phase2 is that it supports a dual antenna structure and can implement carrier aggregation between low frequency and medium-high frequency. The substantial hardware difference between them is the switch in the TXM module: in Phase2, there is a single-pole multiple-throw switch that can only connect one antenna; in Phase3, there is a double-pole multiple-throw switch that allows two poles to be connected to two antennas.

In Fig. 10, the original single-pole multiple-throw switch (multi-channel antenna switch) is changed into a double-pole multiple-throw switch, and the double poles are connected to the terminals of the corresponding two antennas respectively. The two antennas are low-frequency antenna 151 and medium-high frequency antenna 152, and the two groups of switches can be turned on at the same time, which enables the dual antenna function.

Such Phase3 Plus is also package compatible with the original Phase3 architecture, and has the same advantages as the present invention, such as low cost, high integration and strong compatibility.

The new Phase2 Plus architecture of the present invention organically reorganizes each component of the original RF architecture, and its beneficial effects are as follows:
Firstly, the low-frequency power amplifier and the medium-frequency power amplifier in the transmission module 110 in the prior art can only be used for 3G, 4G and 5G, and the present invention reuses them as the low-frequency and medium-frequency power amplifier channels of GSM. In addition, the switches corresponding to the two power amplifiers provide an output channel for the low-frequency and medium-frequency of GSM, respectively. The low-frequency and medium-frequency power amplifier channels are fully reused, and the independent power amplifier of GSM is omitted. Without using expensive TCSAW filters, using ordinary SAW filters to achieve the same effect can effectively reduce the cost. In addition, a large amount of resources are saved, which is more environmentally friendly. In the prior art, the medium-frequency and low-frequency power amplifiers are integrated in the TXM, now the part of power amplifier is removed, and its space is filled by multiple filters and multi-channel LNAs, which together with the reserved multi-channel antenna switch form a new L-FEMiD component, fully reducing the overall hardware cost.

Secondly, in the case of the withdrawal of GSM from the network, only the transmission component 110 needs to be replaced with the ready-made Phase2 MMMB component, which can achieve the maximum cost saving. Moreover, because the transmission component 110 and the Phase2 MMMB are package compatible designs, users do not even need to redesign the PCB, and users can easily realize the board level compatible design with or without GSM, so as not to waste the cost. Compatibility is also reflected in the integration of filters with different band combinations, which facilitates users to achieve board level compatibility of domestic and international bands.

Finally, such transmission and receiving modules can support complete 2G, 3G, 4G and 5G (Sub 3GHz) networks. In smaller packages, the integration of the RFFE is significantly enhanced. A large number of peripheral filters and LNA devices are integrated. The valuable area of the PCB is saved for users, the complexity of use is greatly simplified, and the design cycle is reduced. Space saving makes it possible for mobile phones to add other functions.

The above description has already described various embodiments of the present invention, and the above description is exemplary, not exhaustive, and is not limited to the disclosed embodiments. Without departing from the scope and spirit of the illustrated embodiments, many modifications and changes will be apparent to those of ordinary skill in the art.

## Claims

1. A multi-mode, multi-band radio-frequency front-end (RFFE) circuit, **characterized in that**, the circuit being provided between a transceiver and an antenna, and the circuit comprising:
a transmission module, which is connected to the transceiver and configured to amplify a radio-frequency (RF) transmission signal generated by the transceiver;
a receiving module having a transmission channel and a receiving channel; the receiving channel receives a RF signal from the antenna, amplifies the RF signal and transmits it to the transceiver; the transmission channel is cascaded to an output terminal of the transmission module and transmits the RF transmission signal amplified by the transmission module to the antenna;
2G low-pass filter matching circuits, connected between the transmission module and the receiving module;
power amplifiers in the transmission module supporting 2G to 5G communication standards.

2. The multi-mode, multi-band RFFE circuit according to claim 1, **characterized in that**, an input terminal of a low-frequency power amplifier in the transmission module is connected to a single-pole double-throw input switch to receive a 2G low-frequency input signal and a 3G-5G low-frequency input signal from the transceiver respectively; an output terminal of the low-frequency power amplifier is connected to a first single-pole multi-throw output switch.

3. The multi-mode, multi-band RFFE circuit according to claim 2, **characterized in that**, an input terminal of a medium-frequency power amplifier in the transmission module is connected to a single-pole double-throw input switch to receive a 2G medium-frequency input signal and a 3G-5G medium-frequency input signal from the transceiver respectively; an output terminal of the medium-frequency power amplifier is connected to a second single-pole multi-throw output switch.

4. The multi-mode, multi-band RFFE circuit according to claim 3, **characterized in that**, an input terminal of a high-frequency power amplifier in the transmission module is directly connected to a 4G-5G high-frequency signal output terminal of the transceiver, and an output terminal of the high-frequency power amplifier is connected to a multi-pole multi-throw output switch.

5. The multi-mode, multi-band RFFE circuit according to claim 4, **characterized in that**, the receiving module comprises a multi-channel antenna switch, a multiplexer and a filter, low noise amplifiers (LNAs) and input switches connected thereto;
the multi-channel antenna switch has at least one common output terminal, the common output terminal is configured to be connected to a terminal of the antenna, and different input terminals of the multi-channel antenna switch are connected to a common terminal of the multiplexer, the filter, or the 2G low-pass filter matching circuit;
the other end of the filter is connected to an output terminal of the second single-pole multi-throw output switch or an output terminal of the multi-pole multi-throw output switch;
a transmission terminal of the multiplexer is connected to an output terminal of the first single-pole multi-throw output switch, an output terminal of the second single-pole multi-throw output switch, or the multi-pole multi-throw output switch; a receiving terminal of the multiplexer is connected to the input switch connected to the LNA;
an output terminal of the LNA is connected to the transceiver.

6. The multi-mode, multi-band RFFE circuit according to claim 5, **characterized in that**, one terminal of the multi-pole multi-throw output switch can receive a signal output from the filter and transmit the signal from another terminal of the multi-pole multi-throw output switch to the input switch of the receiving module.

7. The multi-mode, multi-band RFFE circuit according to claim 5, **characterized in that**, the LNAs comprises a low-frequency LNA, a medium-frequency LNA, and a high-frequency LNA.

8. The multi-mode, multi-band RFFE circuit according to claim 5, **characterized in that**, the 2G low-pass filter matching circuit is configured to support 2G low frequency band;
one end of the 2G low-pass filter matching circuit is connected to an output terminal of the first single-pole multi-throw output switch, and the other end is connected to an input terminal of the multi-channel antenna switch.

9. The multi-mode, multi-band RFFE circuit according to claim 5, **characterized in that**, the 2G low-pass filter matching circuit is configured to support a 2G medium frequency band;
one end of the 2G low-pass filter matching circuit is connected to an output terminal of the second single-pole multi-throw output switch, and the other end is connected to an input terminal of the multi-channel antenna switch.

10. The multi-mode, multi-band RFFE circuit according to claim 5, **characterized in that**, the multi-channel antenna switch is a double-pole multi-throw switch, double poles of the common output terminal are respectively connected to terminals of corresponding two antennas, and the two antennas are a low-frequency antenna and a medium-high frequency antenna, respectively.

11. The multi-mode, multi-band RFFE circuit according to claim 5, **characterized in that**, the multiplexer is a non-temperature-compensation multiplexer, and the filter is a non-temperature-compensation filter.

12. The multi-mode, multi-band RFFE circuit according to claim 5, **characterized in that**, the multi-channel antenna switch, the multiplexer, the filter, the LNAs and the input switches of the receiving module are integrated on a chip module.

13. A radio-frequency front-end device, **characterized in that**, comprising a transceiver and an antenna, and also comprising the multi-mode, multi-band radio-frequency front-end circuit according to any one of claims 1 to 12, the circuit being provided between the transceiver and the antenna.

14. A mobile phone, **characterized in that**, comprising the radio-frequency front-end device according to claim 13.
